# EUROPEAN PATENT APPLICATION

(11) **EP 2 317 695 A1**
(43) Date of publication of application: **04.05.2011**
(21) Application number: 10251725.7
(22) Date of filing: 01.10.2010
(51) Int. Cl.: H04L 12/26

(54) **Mixed-mode analysis**

(30) Priority: 29.10.2009 US 608825
(71) Applicant: Fluke Corporation, Everett, WA 98203 (US)
(72) Inventor: Upham, Mike, Colorado 80921 (US); Prescott, Dan, Colorado 80106 (US)
(74) Representative: Lock, Howard John

(57) **Abstract**

A network analyzer determines, analyzes, and displays in streaming and non-streaming modes to provide analysis of specific transactions in that make sense within a primarily streaming or asynchronous flow of data, providing useful and accurate measurements.

## Description

This invention relates to networking, and more particularly to a system, method and apparatus to determine useful and accurate measurements within a primarily streaming or asynchronous flow of data.

Streaming applications typically do not have any true transactions of request/response based interchange of data. Since network analysis tools have heretofore been primarily based on analysis of request/response transactions, in streaming applications or asynchronous data flows, it has been difficult to determine, analyze, and display specific sensible information of streaming type transactions within streaming transmission environments.

In accordance with one aspect of the invention, there is provided a mixed-mode analysis network monitoring system, comprising:
a network monitoring device for monitoring network traffic;
said network monitoring device implementing a mixed-mode analyzer for analyzing data in streaming and non-streaming modes in real time.

In accordance with another aspect of the invention, there is provided a network test apparatus providing mixed-mode analysis network monitoring, comprising:
a network monitoring interface for monitoring network traffic;
a processor for analyzing monitored network traffic in mixed-mode, analyzing data in streaming and non-streaming modes in real time.

In accordance with another aspect of the invention, there is provided a method of operation a network test apparatus to provide mixed-mode analysis network monitoring, comprising:
monitoring network traffic; and
analyzing said monitored network traffic data in streaming and non-streaming modes in real time to provide mixed-mode analysis.

In accordance with another aspect of the invention, a network monitoring system and device employs mixed-mode analysis, switching dynamically from between streaming and non-streaming analysis modes.
The system analyzes transactions and all transaction-related statistics (as well as all TCP-layer usage statistics) for streaming protocols, in real time. The analysis is implemented in several alternate ways. First, via a single-threaded two-pass implementation, queuing up packets during the transaction while analyzing them in a first pass at the application layer and then re-analyzing the queued packets at the transport later in a second pass. Alternatively, the analysis can be done simultaneously in both layers via multi-threaded analysis.

It is an advantage of the preferred embodiment of the present invention that it provides an improved network monitor system that allows analysis of both streaming and non-streaming network application traffic.

It is a further advantage of the preferred embodiment of the present invention that it provides an improved network monitor system that is capable of performing measurement analysis on streaming or asynchronous flows of data.

It is yet another advantage of the preferred embodiment of the present invention that it provides an improved network monitor and system to allow both streaming and non-streaming analysis of traffic to analyze multi-packet transaction signatures as well as classifying custom application changes.

The subject matter of the present invention is particularly pointed out and distinctly claimed in the concluding portion of this specification. However, both the organization and method of operation, together with further advantages and objects thereof, may best be understood by reference to the following description taken in connection with accompanying drawings wherein like reference characters refer to like elements.
FIG. 1 is a block diagram of a network with monitoring system in accordance with mixed-mode analysis;
FIG. 2 is a block diagram of a monitor device for mixed-mode analysis; and
FIG. 3 is a flow chart of operational steps of the system

The system according to a preferred embodiment of the present invention comprises a network monitoring system, apparatus and method, wherein specific transactions are determined, analyzed, and displayed in a manner that makes sense within a primarily streaming or asynchronous flow of data, as well as providing analysis of non-streaming mode data.

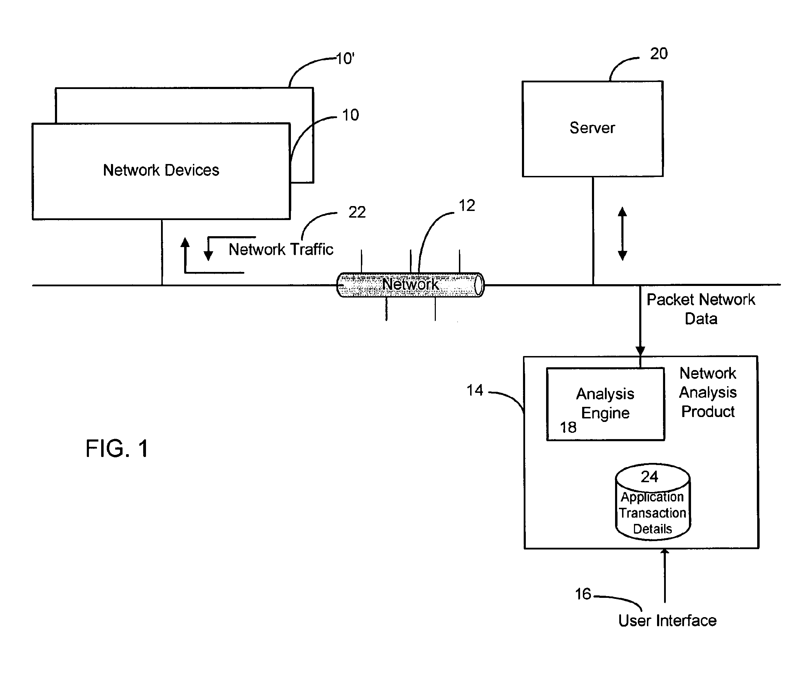

Referring to FIG. 1, a block diagram of a network with an apparatus in accordance with the disclosure herein, a network may comprise plural network devices 10, 10', etc., which communicate over a network 12 by sending and receiving network traffic 22. The traffic may be sent in packet form, with varying protocols and formatting thereof, representing data from a variety of applications and users. These protocols and formatting may include both streaming and non-streaming traffic.

A network analysis product 14 is also connected to the network, and may include a user interface 16 that enables a user to interact with the network analysis product to operate the analysis product and obtain data therefrom, whether at the location of installation or remotely from the physical location of the analysis product network attachment.

The network analysis product comprises hardware and software, CPU, memory, interfaces and the like to operate to connect to and monitor traffic on the network, as well as performing various testing and measurement operations, transmitting and receiving data and the like. When remote, the network analysis product typically is operated by running on a computer or workstation interfaced with the network.

The analysis product comprises an analysis engine 18 which receives the packet network data and interfaces with application transaction details data store 24.

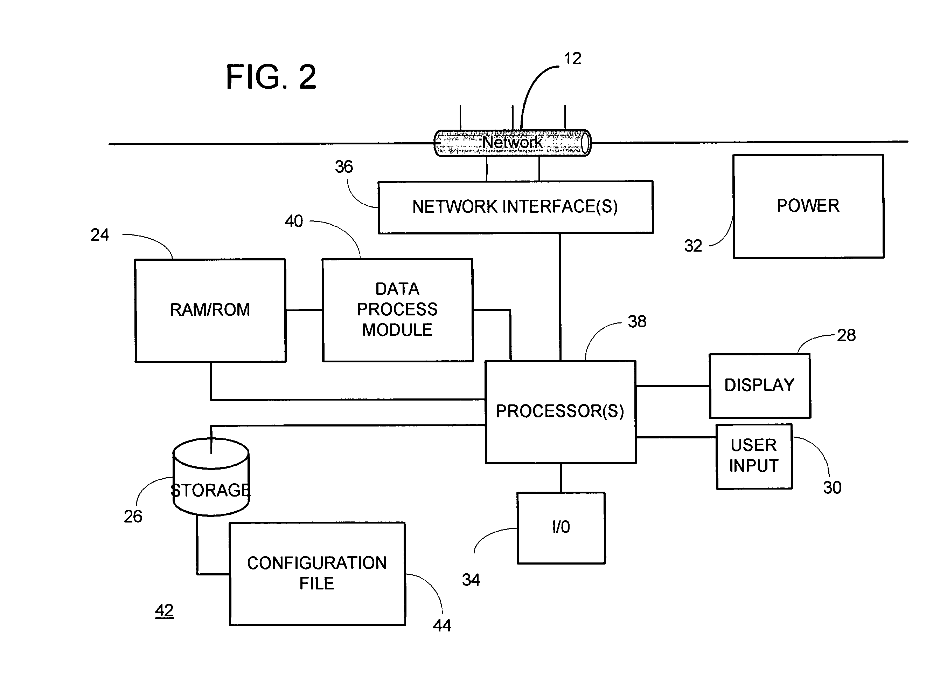

FIG. 2 is a block diagram of a test instrument/analyzer 42 via which the invention can be implemented, wherein the instrument may include network interfaces 36 which attach the device to a network 12 via multiple ports, one or more processors 38 for operating the instrument, memory such as RAM/ROM 24 or persistent storage 26, display 28, user input devices 30 (such as, for example, keyboard, mouse or other pointing devices, touch screen, etc.), power supply 32 which may include battery or AC power supplies, other interface 34 which attaches the device to a network or other external devices (storage, other computer, etc.). Data processing module 40 provides processing of observed network data to provide mixed-mode analysis of network traffic.

In operation, the network test instrument is attached to the network, and observes transmissions on the network to collect information. Under operation of the processor(s) 38, assuming the system is currently operating in a streaming analysis mode, as network traffic is observed, as a transaction start is detected in the streaming data (for example by noting data headers or signatures that would indicate the start of a transaction), the device switches dynamically from streaming-mode TCP analysis into a non-streaming TCP analysis until the-transaction is complete (completion detected by an appropriate signature or end of transaction set of data). In non-streaming TCP analysis mode, the timing and usage statistics are stored for the transaction. Then the operation mode of the analysis is switched back to streaming-mode TCP analysis in real time.

A further option provided is to queue up all packets during a streaming mode transaction, replaying the queued packets through a non-streaming TCP analysis once the transaction is complete, which allows analysis with all of the appropriate timings intact. This allows analysis of data packets in two passes, first at the application layer, and then at the underlying transport layer, enabling handling of multi-packet transaction signatures, as well as classifying custom application changes which occur during the transaction, storing the entire transaction with the proper classification.

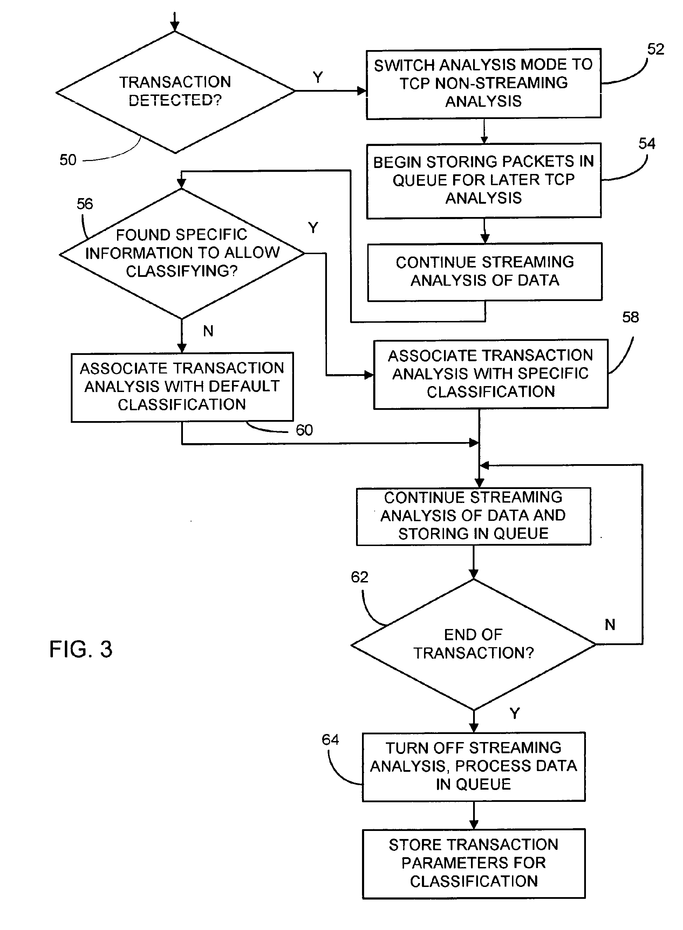

With reference to FIG. 3, a flow chart of the process, the following steps take place to analyze and store a single connection transaction per flow in a streaming data set.

When a first packet of data or other data indicating the start of a transaction in the streaming data flow (which may be transaction data, for example, in a Citrix-ICA environment, this data may comprise a Citrix ICA PACKET_INIT_RESPONSE message) is seen (block 50), the mode of analysis is switched to TCP non-streaming analysis (block 52) which will result in response time statistics (for example) being kept, packets are started to be stored in a queue for later TCP analysis (block 54). Streaming analysis continues on each packet seen to observe and store important information about the transaction to enable classification of the transaction. In a specific example of a Citrix environment, the streaming analysis may comprise Citrix-ICA relevant analysis and observed and stored information may comprise Client Name and the Published Application (PA) name.

For example, in a Citrix-ICA environment, once the identifying information of Client Name and PA name have been found (block 56), the application with which the streaming data is associated with can be classified for inclusion of analysis information. If the application is a custom application for which information is being assembled, that custom application is identified as the relevant application for transaction and statistics analysis compilation for the data flow (block 58) (a flow being the data from the beginning of the transaction transmission to the end of the transmission), and the transactions and statistics are stored and aggregated in association with that application. Otherwise, if not a custom application, the transaction and statistics are associated with a default transaction (block 60).

When the last packet at the end of the transaction is seen (block 62) (for example, in a Citrix-ICA environment, the last packet could be identified as the last packet of an ICA PACKET_INIT_CONNECT_REQUEST message), storing of packets in the queue is stopped (block 64), and packets stored in the queue may then be processed through the a TCP analyzer in a non-streaming mode (with the determined custom application classification or default application). Streaming analysis on this data is shut off during this processing of the data in the queue because it was already done in the previous pass. Finally, the determined parameters from the analysis of the data are stored in connection with the transaction classification (whether specific/custom transaction or default transaction).

The analysis mode is then switched back to streaming-mode TCP analysis for all subsequent packets in the data flow.

The operational steps are suitably performed by the processor(s) 38 (FIG. 2).

In accordance with the system, apparatus and method, analysis of is made in mixed-mode for streaming data, enabling specific non-streaming mode statistics and measurements to be accumulated for streaming data when relevant, as well as compiling streaming mode statistics and measurements.

In the particular implementation discussed above, mixed-mode analysis of network traffic is provided as a two pass (or multiple pass) analysis on data, with storage in a queue when a transaction is recognized that is amenable to multiple types of analysis. Analysis in one mode is made (in the example, streaming data analysis) and when data is recognized that would represent application data that can be also analyzed in a non-streaming mode, the data is stored in a queue for later non-streaming mode analysis, while the streaming mode analysis continues. Once the end of the data is determined, the queued data is then processed in a non-streaming mode. This operation allows streaming analysis, which can provide usage statistics, as well as non-streaming analysis, which can provide timing analysis information.

The system is alternatively implemented to separate the data into two paths of processing with two (or more) types of data, with real time processing, rather than using a queue and later processing the queued data.

The data can be split into multiple types, with custom data types having their own specific processing, or generic processing of generic data.

The system, method and apparatus may suitably be implemented within a network test instrument.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

## Claims

1. A mixed-mode analysis network monitoring system, comprising:
a network monitoring device for monitoring network traffic;
said network monitoring device implementing a mixed-mode analyzer for analyzing data in streaming and non-streaming modes in real time.

2. The system according to claim 1, wherein monitored network traffic is analyzed at an application layer and analyzed at a transport layer.

3. The system according to claim 2, wherein traffic is analyzed first at the application layer and us is queued for later analysis at the transport layer.

4. The system according to claim 2, wherein traffic is analyzed substantially simultaneously at the application layer and at the transport layer.

5. A network test apparatus providing mixed-mode analysis network monitoring, comprising:
a network monitoring interface for monitoring network traffic;
a processor for analyzing monitored network traffic in mixed-mode, analyzing data in streaming and non-streaming modes in real time.

6. The network test instrument apparatus according to claim 5, wherein monitored network traffic is analyzed at an application layer and analyzed at a transport layer.

7. The network test instrument apparatus according to claim 6, wherein traffic is analyzed first at the application layer and is stored in a queue for later analysis at the transport layer.

8. The network test instrument apparatus according to claim 6 wherein traffic is analyzed substantially simultaneously at the application layer and at the transport layer.

9. A method of operation a network test apparatus to provide mixed-mode analysis network monitoring, comprising:
monitoring network traffic; and
analyzing said monitored network traffic data in streaming and non-streaming modes in real time to provide mixed-mode analysis.

10. The method according to claim 9, wherein said analyzing comprising analyzing monitored network traffic at an application layer and analyzing monitored network traffic at a transport layer.

11. The method claim 10, further comprising storing monitored data in a queue for later analysis.

12. The method according to claim 11 wherein said monitored data is analyzed at an application layer in substantially real time and said data stored in the queue is monitored later at a transport layer.

13. The method according to claim 10 wherein traffic is analyzed substantially simultaneously at the application layer and at the transport layer.
